# EUROPEAN PATENT APPLICATION

(11) **EP 4 489 144 A1**
(43) Date of publication of application: **08.01.2025**
(21) Application number: 23184189.1
(22) Date of filing: 07.07.2023
(51) Int. Cl.: H01M 4/66, H01M 10/0525, H01M 50/534, B32B 27/18, B32B 27/32, H01B 1/24

(54) **POLYMER-CARBON COMPOSITE MATERIAL CURRENT COLLECTORS FOR BATTERY ELECTRODES**

(71) Applicant: Karlsruher Institut für Technologie, 76131 Karlsruhe (DE)
(72) Inventor: Bresser, Dominic, 89073 Ulm (DE); Wan, Mintao, 89231 Neu-Ulm (DE); Passerini, Stefano, 76131 Karlsruhe (DE)

(57) **Abstract**

The present invention relates to conductive composite films for use as a current collector in electrochemical energy storage systems, the composite films comprising a polymer and carbon black. The invention further relates to methods of producing these films, and their use in current collectors and electrochemical energy storage systems.

## Description

### FIELD OF THE INVENTION

The present invention relates to conductive composite films for use as current collectors in electrochemical energy storage systems, such as batteries and in particular lithium batteries, with high energy density and capacity. According to the present invention, the conductive composite films comprise or consist of composite materials comprising a polymer and carbon black. Also part of the present invention are current collectors made of the conductive composite films of the invention, electrochemical energy storage systems including them, as well as methods for producing the conductive composite films and current collectors according to the invention. Finally, present invention also relates to the use of the conductive composite films and the current collectors in electrochemical energy storage systems.

### BACKGROUND OF THE INVENTION

The demand for batteries with high energy density has significantly increased with regard to the steadily rising complexity of portable electronic devices and their widespread application in electric vehicles. Lithium-ion batteries are rechargeable batteries using the reversible reduction of lithium ions to store energy, and the predominant battery type used in portable consumer electronics and electric vehicles. Due to the great success of this technology, however, state-of-the-art lithium-ion batteries, which employ transition metal oxide-based cathodes and graphite-based anodes, are approaching the maximum practical energy density.

One approach to further increase the energy density of lithium-based batteries is the use of metallic lithium as an anode active material. Lithium metal has received great attention as a promising alternative anode material due to its very low density (0.534 g·cm⁻³), extremely low redox potential (-3.04 V vs. the standard hydrogen electrode), and the highest specific capacity (3860 mAh·g⁻¹). Metallic lithium anodes, however, tend to undergo cracking and dendrite formation, originating from inharmonious lithium stripping and/or plating during battery cycling. This may eventually lead to electronic disconnection of part of the lithium metal, and poor lithium utilization. Furthermore, dendrite formation risks short-circuiting of the battery with associated risk of causing fire, which represents a major safety risk for vehicles and portable electronic devices.

In order to limit these risks, lithium-ion batteries using metallic lithium as the anode active material require the use of a suitable current collector, serving as a substrate that provides sufficient mechanical stability and ensures electrical contact throughout the electrode. In fact, the use of a current collector that covers the whole lithium metal foil is essential.

Copper foil is typically used as a current collector for lithium-metal anodes, and also for the commercial supply of rather thin lithium foils, which are supplied on copper foil as a substrate. The high density of copper (8.96 g·cm⁻³) compared to metallic lithium (0.534 g·cm⁻³), in combination with the need for thin lithium foils (typically around 50 µm), results in an exorbitant mass contribution of the current collector to the total electrode. For instance, the combination of a 50 µm lithium foil with a 10 µm copper foil signifies that the copper foil will account for more than 77% of the anode weight. Thus, there is a need for a lighter, safer and cost-efficient alternative.

KR-10-0714128 B1 discloses non-metallic current collectors for lithium ion batteries. The batteries comprise first and second non-metallic current collectors composed of first and second polymer films and first and second non-metallic conductor layers, with first and second electrodes formed on first and second non-metallic conductor layers. This requires attachment of a carbon nanotube or a carbon nanoparticle paste as the non-metallic conductor layers on polymer films, which is costly and difficult to achieve.

CN 107946597 A concerns polymer membrane current collectors doped with conductive substances, selected from graphene, super P, carbon nanotubes, carbon fiber, conductive polymer materials and conductive graphite. The polymer film is processed by wet film making, dry stretching film making, fiber yarn weaving film making or non-woven fabric method film making. Then the final structure is formed by filling the conductive substance into the pores of the porous polymer film. However, there is a risk of uneven distribution of the conductive substance, and of the conductive substance falling off the polymer membrane during use.

The state of the art therefore constitutes a problem.

### SHORT DESCRIPTION OF THE INVENTION

The present invention is defined in the appended claims.

In particular, the present invention is embodied by a conductive composite film for use as a current collector in an electrochemical energy storage system, wherein the composite film comprises a polymer, such as for example polyethylene, and carbon black. It has been found that such composite films are particularly suitable for forming high performance and reduced weight current collectors.

According to one embodiment, the conductive composite film of the present invention may further comprise particulate aluminium hydroxide. The presence of particulate aluminium hydroxide has been found to improve fire retardancy of the conductive composite film and thereby improve the safety of any electrochemical energy storage device they are used in.

According to one embodiment, the conductive composite film of the present invention is adapted for use as a current collector in a battery, such as for example a lithium battery. It has been found that the conductive composite films of the present invention are particularly suitable for use in batteries such as lithium batteries. In the present application, lithium batteries are lithium-metal batteries and/or lithium-ion batteries preferably lithium-metal batteries.

According to one embodiment, the conductive composite film of the present invention is adapted for use as a current collector on a lithium metal anode of a lithium battery. The conductive composite films of the present invention are particularly suitable for use with lithium metal anodes in lithium batteries.

Also part of the present invention are current collectors comprising or consisting of conductive composite films according to the invention. The current collectors according to the present invention impart improved durability, safety and performance to batteries in which they are employed.

Also part of the present invention are methods for producing conductive composite films of the invention. Methods according to the invention comprise the steps of (i) providing a particulate polymer, such as polyethylene, (ii) providing carbon black, (iii) mixing the provided particulate polymer and the provided carbon black to obtain a particulate mixture, (iv) ball milling the obtained particulate mixture to obtain a milled particulate mixture, (v) hot-pressing the obtained milled particulate mixture to form a conductive composite material, and (vi) hot calendaring the obtained conductive composite material to obtain a conductive composite film according to the invention. The method of production according to the invention is simple to perform and employs equipment and raw materials that are easily procured.

According to one embodiment of the present invention, the amount of provided carbon black is from 3 wt.-% to 50 wt.-% of the provided particulate polymer. For example, the amount of provided carbon black may be from 10 wt.-% to 40 wt.-% of the provided particulate polymer, or from 12 wt.-% to 30 wt.-% of the provided particulate polymer, or from 15 wt.-% to 25 wt.-% of the provided particulate polymer. For example, the weight ratio of provided particulate polymer to provided carbon black may be from 15:1 to 2:1, or from 10:1 to 5:1, such as for example 9:1 or 8:1 or 7:1 or 6:1.

According to one embodiment of the present invention, the hot-pressing in step (v) is carried out at a temperature of 50°C to 200°C. For example, the hot-pressing is carried out at a temperature of 70°C to 180°C, or at a temperature of 90°C to 150°C, such as for example at about 100°C, or about 110°C, or about 120°C, or about 130°C, or about 140°C.

According to one embodiment of the present invention, the method of production comprises a further step (ii') of providing particulate aluminium hydroxide, which is subsequently mixed with the provided particulate polymer and the provided carbon black. The use of aluminium hydroxide in the method leads to improved fire retardancy of the finished product, thereby improving its safety during use, without negatively impacting its electric properties.

According to one embodiment of the present invention, the amount of provided particulate aluminium hydroxide is from 15 wt.-% to 75 wt.-% of the provided particulate polymer. For example, the amount of provided particulate aluminium hydroxide may be from 30 wt.-% to 70 wt.-% of the provided particulate polymer, or from 40 wt.-% to 60 wt.-% of the provided particulate polymer. For example, the weight ratio of provided particulate polymer to provided particulate aluminium hydroxide may be from 3:1 to 1.25:1, or from 2.5:1 to 1.5:1, such as for example 2:1 or 1.8:1 or 1.7:1 or 1.6:1.

Finally, the use of a conductive composite film according to the present invention in a charge collector and/or in an electrochemical energy storage system also forms part of the present invention.

### SHORT DESCRIPTION OF THE FIGURES

The invention will be further illustrated by reference to the following figures:

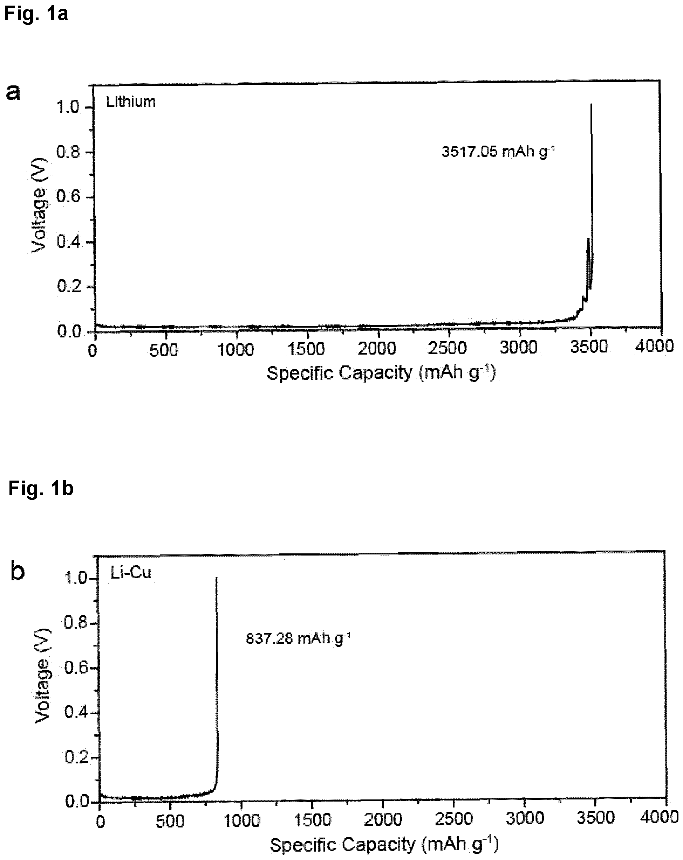

Figs. 1a to 1d show measurement graphs for the specific capacities of pure lithium (a), a traditional Li-Cu anode of the state of the art (b), a Li-PE/C anode according to the present invention (c) and a Li-PE/C/Al(OH)₃ anode according to the present invention (d);

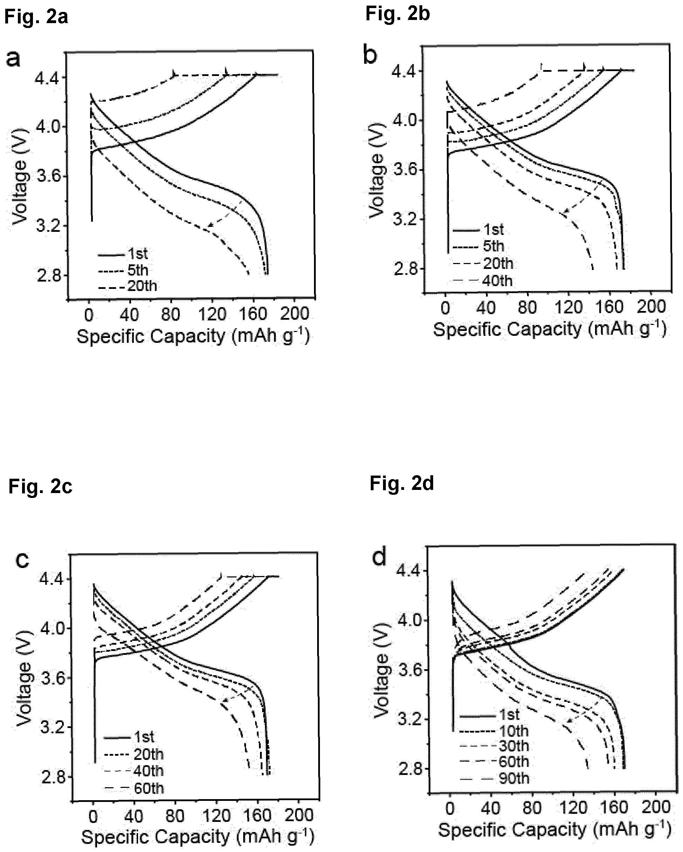

Figs. 2a to 2d show charge/discharge diagrams of single-layer pouch cells comprising NMC as cathodes and, as anodes, respectively, pure lithium (a), a traditional Li-Cu anode of the state of the art (b), a Li-PE/C anode according to the present invention (c) and a Li-PE/C/Al(OH)₃ anode according to the present invention (d);

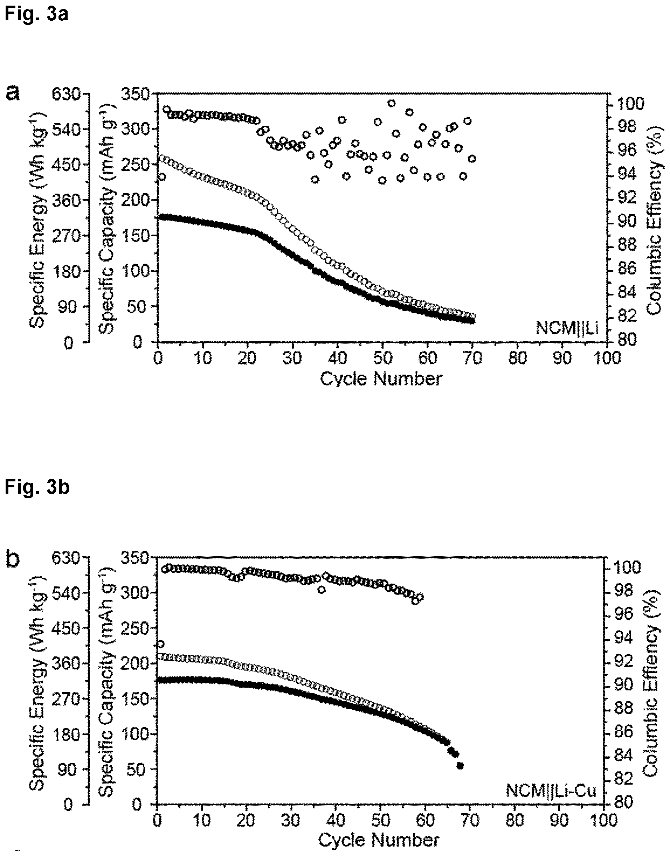

Figs. 3a to 3d show the evaluation of the specific capacities after charge/discharge cycling of single-layer pouch cells comprising NMC as cathodes and, as anodes, respectively, pure lithium (a), a traditional Li-Cu anode of the state of the art (b), a Li-PE/C anode according to the present invention (c) and a Li-PE/C/Al(OH)₃ anode according to the present invention (d).

It is understood that the following description and references to the figures concern exemplary embodiments of the present invention and shall not be limiting the scope of the claims.

### DETAILED DESCRIPTION OF THE INVENTION

The present invention according to the appended claims provides a film for use as a current collector in an electrochemical energy storage system with improved properties regarding performance and safety. The film comprises an electrically conductive composite material.

The use of metallic lithium as an anode active material is one of the major targets in battery research and development nowadays. However, it comes with the drawback that the use of a current collector is necessary, due to cracking and dendrite formation, which occurs during battery charge/discharge-cycles. Lithium-ion batteries are particularly popular in portable electronic devices and electric vehicles, due to their high energy density. Traditionally, copper foils are being used as current collectors for lithium metal anodes, leading to added mass of the battery system, and thereby reducing the overall energy density. Typically, a lithium metal foil having a thickness of 50 µm would be used in combination with a 10 µm copper foil, thereby increasing the relative weight of the combined foils by more than 3-fold, given that the density of copper is more than 16 times the density of metallic lithium.

According to the present invention, a conductive composite film is provided, comprising or consisting of a polymer, such as polyethylene, and carbon black, which is suitable for use as a current collector, replacing the need for employing metallic copper altogether. The polymer portion provides a mechanically stable matrix, whereas the carbon black imparts electrical conductivity to the film. It has been found that the conductive composite films according to the invention may be employed as current collectors, due to their excellent electrochemical stability, high mechanical stability, and the good electronic conductivity. While providing the function of electron collection, the conductive composite films according to the invention have a drastically lower specific mass compared to metallic copper. As a result, lithium batteries comprising lithium-metal anodes with a current collector made of the conductive composite film according to the invention provide substantially higher specific energy and, as has been found, also better cycling stability compared to the lithium-metal anodes on copper current collectors.

The polymer, such as polyethylene, acts as the base material of the conductive composite films according to the present invention, and carbon black as the conductive additive. The polymer employed may be a single polymer species, such as a homopolymer or a co-polymer, or a mixture of different polymers. Polyethylene is possibly the world's most commonly produced plastic, and widely available in particulate form. Testing has showed that is provides good mechanical stability and durability for use in current collectors. Carbon black may be produced by the incomplete combustion of coal and coal tar, vegetable matter, or petroleum products, and is also widely available. It is commonly used as a conductive additive in lithium-ion batteries. The raw materials for providing the conductive composite films according to the present invention are accordingly easily accessible and good value.

The amount of carbon black in the conductive composite film may be from 3 wt.-% to 50 wt.-%, based on the amount of polymer. For example, the amount of carbon black may be from 10 wt.-% to 40 wt.-% of the polymer, or from 12 wt.-% to 30 wt.-% of the polymer, or from 15 wt.-% to 25 wt.-% of the polymer. For example, the weight ratio of polymer to provided carbon black may be from 15:1 to 2:1, or from 10:1 to 5:1, such as for example 9:1 or 8:1 or 7:1 or 6:1.

The conductive composite films according to the present invention may have a density of 1.01 g·cm⁻³ (in the case of a 9:1 weight ratio of polyethylene to carbon black), which is vastly lower than the density of metallic copper (8.96 g·cm⁻³). As a result, when a 50 µm thick lithium foil is combined with a 20 µm thick conductive composite film according to the present invention, the resulting mass per area of combined Li-PE/C anode will be 4.69 mg·cm⁻². On the other hand, when the same 50 µm thick lithium foil is combined with a 10 µm thick copper film, the resulting specific mass per unit area of the Li-Cu anode will be 11.63 mg·cm⁻². Consequently, with a (theoretical) specific capacity of metallic lithium of 3860 mAh·g⁻¹, the Li-Cu anode incl. the current collector will have a specific capacity of 886 mAh·g⁻¹, whereas the Li-PE/C anode comprising the conductive composite films according to the present invention will have a specific capacity of 2197 mAh·g⁻¹.

The specific capacities of the various anodes directly lead to corresponding specific energies in full battery cells including the various anodes. Association of the various anodes with lithium nickel manganese cobalt oxide (NMC) cathodes to form full cells provided correspondingly best specific energy for the NMC∥Li full-cell, followed by the NMC∥Li-PE/C full-cell and finally the NMC∥Li-Cu full-cell. As expected, the NMC∥Li full-cell has low cycling stability. However, it was found that while both NMC∥Li-PE/C full-cell and the NMC∥Li-Cu full-cell had good cycling stability, the cycling stability of the NMC∥Li-PE/C full-cell, comprising the conductive composite films of the present invention was even better than that of the state of the art NMC∥Li-Cu full-cell.

According to one embodiment, the conductive composite films according to the present invention may further comprise particulate aluminium hydroxide. Aluminium hydroxide (Al(OH)₃) is commonly used as a flame retardant in various applications. It is particularly effective in reducing the flammability of materials and slowing down the spread of fire. It is commonly incorporated into plastics, textiles, coatings, cables, and other materials to enhance their fire resistance properties and improve overall safety. Tests have shown that incorporation of aluminium hydroxide in the conductive composite films of the present invention does not significantly affect their suitability for use as current collectors, but it does improve flame retardancy.

The amount of aluminium hydroxide included in the conductive composite film according to the invention may be from 15 wt.-% to 75 wt.-%, based on the amount of polymer. For example, the amount of aluminium hydroxide may be from 30 wt.-% to 70 wt.-% of the polymer, or from 40 wt.-% to 60 wt.-% of the polymer. For example, the weight ratio of polymer to aluminium hydroxide may be from 3:1 to 1.25:1, or from 2.5:1 to 1.5:1, such as for example 2:1 or 1.8:1 or 1.7:1 or 1.6:1.

A conductive composite film according to the present invention, comprising 50 wt.-% polyethylene, 21 wt.-% carbon black and 29 wt.-% aluminium hydroxide (7:3 ratio of polyethylene to carbon black, and 40 wt.-% aluminium hydroxide based on the sum of polyethylene and carbon black) has a density of 1.17 g·cm⁻³, which is higher than the above described PE/C-system, but still vastly lower than the density of metallic copper (8.96 g·cm⁻³). As a result, when a 50 µm thick lithium foil is combined with a 12 µm thick conductive composite film according to this embodiment, the resulting mass per area of combined Li-PE/C/Al(OH)₃ anode will be 4.08 mg·cm⁻², leading to a (theoretical) specific capacity of 2528 mAh·g⁻¹. In addition, testing showed that the cycling stability of a NMC∥Li-PE/C/Al(OH)₃ pouch cell is similar to that of a NMC∥Li-PE/C pouch cell.

Also part of the present invention are current collectors comprising or consisting of the conductive composite films of the invention. The conductive composite films may have thicknesses that make them suitable for use as current collectors in batteries, depending on the requirements for mechanical stability or over all weight/energy density of the electrochemical energy storage system. In general, the film thickness is not further limited, and it may be from 5 µm to 500 µm, for example from 8 µm to 250 µm, or from 10 µm to 200 µm, or from 12 µm to 100 µm, or from 15 µm to 50 µm. In specific embodiments, the film thickness may be 10 µm, or 12 µm, or 15 µm, or 20 µm, or 30 µm, or 40 µm, or 50 µm.

Also part of the present invention are methods for forming the conductive composite films of the invention. According to one embodiment, a conductive composite film may be formed by providing a particulate polymer, such as particulate polyethylene, and particulate carbon black. The exact type and particle size of the provided polymer and carbon black is not particularly limited. The provided particulate materials are mixed together and milled in a ball mill until a smooth, uniform particulate milled composition is formed. The obtained composition is then hot pressed to form a conductive polymer/carbon composite, which is subsequently hot calendared to the desired thickness. The use of polyethylene makes the composite especially suitable for calendaring. The hot calendaring step may be adapted in order to obtain the desired thickness of a current collector, as discussed above.

The process according to the present invention is not particularly limited in terms of the actual processing of the materials. It can be carried out using the knowledge and skills of the skilled person in the art, using standard techniques and equipment.

In one embodiment, particulate aluminium hydroxide is added to the particulate mixture prior to the ball milling step.

The relative amounts of polymer, carbon black and, if required, aluminium hydroxide are selected in accordance with the desired outcome of the final product. Since all the provided particulate materials are fully converted into the conductive composite film according to the invention, the selection of relative amounts is straightforward.

In general, in the case where higher conductivity is required for a specific application, the skilled person in the art will accordingly include a higher proportion of carbon black. Similarly, if fire safety is an issue, for example in the manufacture of batteries for electric vehicles, the amount of aluminium hydroxide should be adapted accordingly.

Finally, the use of the conductive composite films according to the present invention in a current collector, and/or in an electrochemical energy storage system such as a battery is also part of the present invention. While their use has been discussed herein with reference to lithium batteries, due to their simple method of manufacture and excellent electrochemical properties as well as their proximity to commercial applications, they may be employed in any other electrochemical energy storage systems, such as for example lead-acid batteries, lithium-polymer batteries, , ambient-temperature sodium-ion and sodium-metal batteries, or flow batteries such as zinc-bromine cells, vanadium redox-flow batteries, or high temperature batteries such as sodium-sulphur batteries or sodium-metal chloride batteries.

It should be noted that the present invention may comprise any combination of the features and/or limitations referred to herein, except for combinations of such features which are mutually exclusive. The foregoing description is directed to particular embodiments of the present invention for the purpose of illustrating it. It will be apparent, however, to one skilled in the art, that many modifications and variations to the embodiments described herein are possible. All such modifications and variations are intended to be within the scope of the present invention, as defined in the appended claims.

### EXAMPLES

### Example 1: measurement of specific capacities

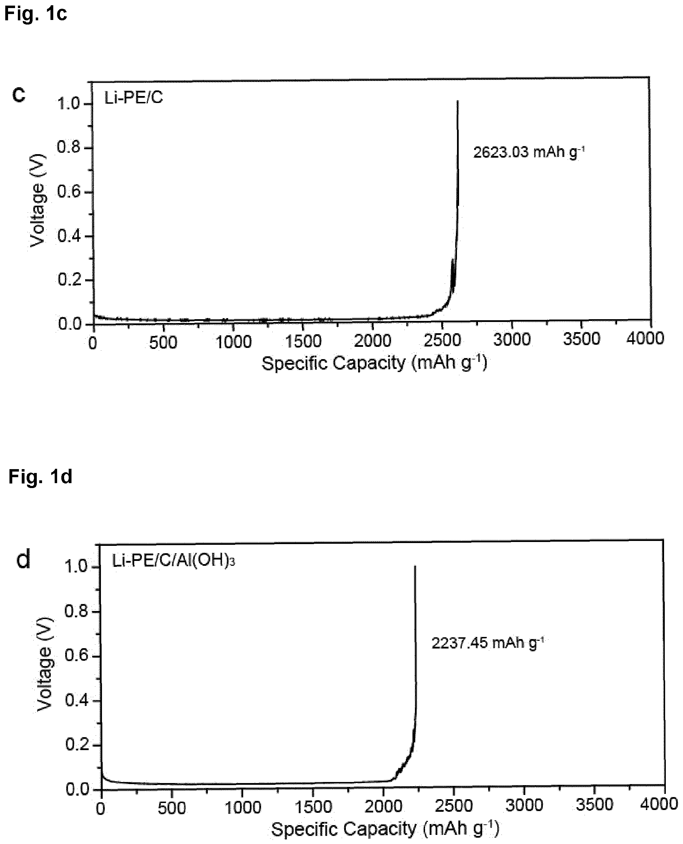

Specific capacities of pure lithium, a Li-Cu anode (50 µm/10 µm) and a Li-PE/C (9:1 weight ratio) anode (50 µm/20 µm) were measured using standard methods known in the art. The results are shown in Fig. 1a, 1b and 1c. In these measurements, pure lithium was found to have a specific capacity of 3517 mAh·g⁻¹, the Li-Cu anode was found to have a specific capacity of 837 mAh·g⁻¹, and the Li-PE/C anode was found to have a specific capacity of 2128 mAh·g⁻¹. In addition, the specific capacity of a Li-PE/C/AI(OH)3 (50:21:29 weight ratio) anode (50 µm/12 µm) was measured as shown in Fig. 1d, giving a specific capacity of 2237 mAh·g⁻¹. These measurements are in good agreement with the theoretical values discussed above.

### Example 2: measurement of cycling stability

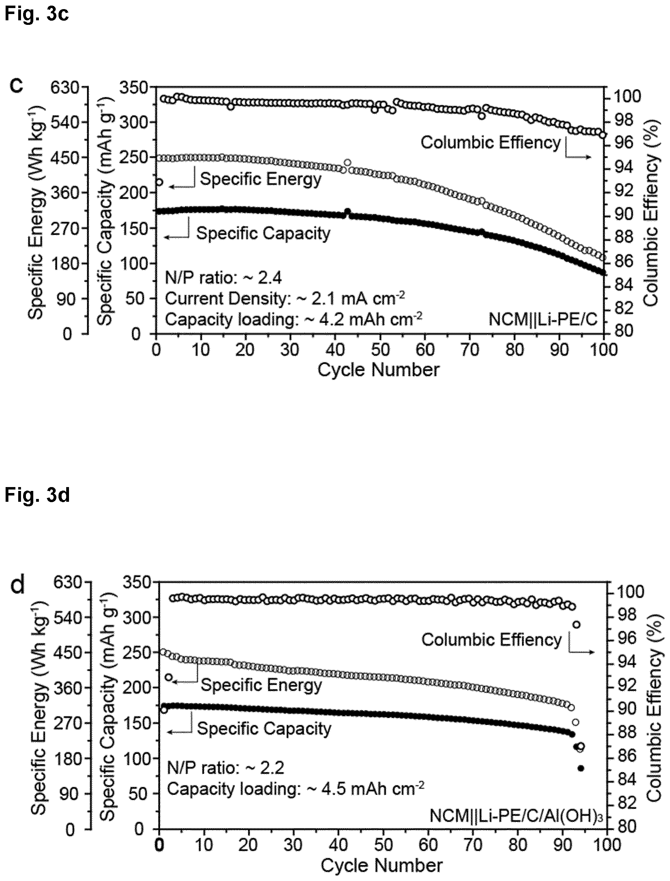

Cycling stabilities of a NMC∥Li single-layer pouch cell, a NMC∥Li-Cu single-layer pouch cell and a NMC∥Li-PE/C single-layer pouch cell were tested. The test conditions were as follows. Mass loading - about 24 mg·cm⁻²; capacity loading - about 4.2 mAh·cm⁻²; N/P ratio - about 2.4; voltage range - 2.8 V to 4.4 V; charging rate - 0.5 C. The cathodes were built according to a ratio NMC₆₂₂:C65:PVDF of 90:5:5. The anodes were built as described in the detailed description above (lithium metal 50 µm; copper foil 10 µm; PE/C film 20 µm). The results are shown in Figs. 2a, 2b and 2c and 3a, 3b and 3c, respectively. As expected, the NMC∥Li full-cell suffered a sharp capacity decay after about 20 cycles. Cycling stability was substantially improved for the NMC∥Li-Cu full-cell and the NMC∥Li-PE/C full-cell. It is shown that the NMC∥Li-PE/C full-cell, which comprises the conductive composite film according to the present invention, has an even better cycling stability than the traditional NMC∥Li-Cu full-cell.

The cycling stability of a NMC∥Li-PE/C/Al(OH)₃ single-layer pouch cell was determined using slightly different test conditions: Mass loading - about 25 mg·cm⁻²; capacity loading - about 4.5 mAh·cm⁻²; N/P ratio - about 2.2; voltage range - 2.8 V to 4.4 V; charging rate - 0.3 C; discharging rate - 0.5 C. The anode was built as described in the detailed description above (lithium metal 50 µm; PE/C/Al(OH)₃ film 12 µm). The results are shown in Figs. 2d and 3d. The cycling stability is similar to that of the NMC∥Li-PE/C full-cell.

### Example 3: fire retardancy test

Three conductive composite films according to the present invention were provided, having the following mass ratios:

| Sample | Polyethylene | Carbon black | Aluminium hydroxide |
|---|---|---|---|
| A | 70 wt.-% | 30 wt.-% | 0 |
| B | 58 wt.-% | 25 wt.-% | 17 wt.-% |
| C | 50 wt.-% | 21 wt.-% | 29 wt.-% |

Stripes of each conductive composite film were lit using a Bunsen burner. Sample A burned violently, sample B burned slowly and sample C self-extinguished, even after repeated re-ignition with the Bunsen burner.

## Claims

1. Conductive composite film for use as a current collector in an electrochemical energy storage system, the composite film comprising a polymer and carbon black.

2. Conductive composite film according to claim 1, wherein the polymer is polyethylene.

3. Conductive composite film according to any one of claims 1 or 2, further comprising particulate aluminium hydroxide.

4. Conductive composite film according to any one of claims 1 to 3, wherein the electrochemical energy storage system is a battery, such as for example a lithium battery.

5. Conductive composite film according to any one of claims 1 to 4, wherein the electrochemical energy storage system is a lithium battery comprising a metallic lithium electrode.

6. Current collector comprising a conductive composite film as defined in any of the previous claims 1 to 5.

7. Method of production of a conductive composite film as defined in any of the previous claims 1 to 5, comprising the steps of
(i) providing a particulate polymer;
(ii) providing carbon black;
(iii) mixing the particulate polyethylene provided in step (i) and the carbon black provided in step (ii) to obtain a particulate mixture;
(iv) ball milling the particulate mixture obtained at the end of step (iii) to obtain a milled particulate mixture;
(v) hot-pressing the milled particulate mixture obtained at the end of step (iv) to form a conductive composite material; and
(vi) hot calendaring the conductive composite material obtained at the end of step (v) to obtain a conductive composite film.

8. Method according to claim 7, wherein the particulate polymer is particulate polyethylene.

9. Method according to any one of claims 7 or 8, wherein the amount of carbon black provided in step (ii) is from 3 wt.-% to 50 wt.-% of the particulate polyethylene provided in step (i).

10. Method according to any one of claims 7 to 9, wherein the hot-pressing in step (v) is carried out at a temperature of 50°C to 200°C.

11. Method according to any one of claims 7 to 10, comprising the further step of
(ii') providing particulate aluminium hydroxide;
and wherein step (iii) is modified to step
(iii) mixing the particulate polyethylene provided in step (i), the carbon black provided in step (ii) and the particulate aluminium hydroxide provided in step (ii') to obtain a particulate mixture.

12. Method according to claim 11 wherein the amount of particulate aluminium hydroxide provided in step (ii') is from 15 wt.-% to 75 wt.-% of the particulate polyethylene provided in step (i).

13. Use of a conductive composite film as defined in any one of claims 1 to 5, or as obtained according to the method of any one of claims 7 to 12, in a current collector or in an electrochemical energy storage system.
